# FASCICULE DE BREVET EUROPEEN

(11) **EP 3 549 804 B1**
(45) Date de publication et mention de la délivrance du brevet: **14.07.2021**
(21) Numéro de dépôt: 19166843.3
(22) Date de dépôt: 02.04.2019
(51) Int. Cl.: B60J 5/10, B60J 1/00

(54) **MONTANTS DE PANNEAU STRUCTUREL DE HAYON OPTIMISÉS**
OPTIMIERTE STÄNDER FÜR STRUKTURPANEEL EINER HECKKLAPPE
OPTIMISED STRUCTURAL PANEL MOUNTS FOR TAILGATE

(30) Priorité: 04.04.2018 FR 1852907
(43) Date de publication de la demande: 09.10.2019
(73) Titulaire: Compagnie Plastic Omnium, 69007 Lyon (FR)
(72) Inventeur: STRUSS, Martin, 84103 Bratislava (SK); COUDRON, Philippe, 69300 CALUIRE ET CUIRE (FR)
(74) Mandataire: LLR

(56) Documents cités:
- EP-A1- 3 241 700
- DE-A1-102011 000 063
- DE-A1-102015 120 253
- FR-A1- 2 927 876
- JP-A- 2014 019 359
- JP-A- 2014 076 707

## Description

L'invention concerne le domaine des véhicules automobiles et plus particulièrement les véhicules comportant un hayon arrière en plastique.

Le hayon en plastique fermant l'ouverture arrière du véhicule est généralement constitué d'un panneau structurel formant une doublure intérieure et d'un panneau d'habillage extérieur. Le panneau structurel comprend une partie supérieure reliée par des charnières à un segment du toit du véhicule, une partie inférieure contenant des éléments techniques tels que la commande d'ouverture ou le dispositif d'éclairage de la plaque d'immatriculation et comporte une ouverture pour accueillir une vitre arrière. La partie supérieure et la partie inférieure sont reliées par deux montants. La vitre arrière est collée sur toute sa périphérie sur une piste de collage disposée sur les montants et sur les parties inférieure et supérieure.

Préférentiellement, le panneau structurel du hayon (i.e, la doublure) est réalisé par moulage d'un matériau thermodurcissable ou thermoplastique.

Le profil des montants doit satisfaire une multitude de contraintes spécifiques et parfois contradictoires.

En effet, outre la rigidité structurelle requise pour résister sans se déformer aux contraintes liées aux opérations d'ouverture et de fermeture, la largeur des montants conditionne le champ de vision arrière ainsi que la largeur de l'ouverture arrière donnant accès au volume de rangement. De plus, les montants doivent accueillir du côté de la caisse des portées destinées à être mises en contact avec un joint d'étanchéité monté sur la partie fixe du véhicule, ainsi que sur la face extérieure arrière une piste de collage destinée à recevoir la vitre arrière. Enfin, les montants participent à l'aspect général du véhicule et sont visibles par les passagers depuis l'espace intérieur ou depuis l'extérieur de l'habitacle au travers de la lunette arrière. A cet effet, un dépôt sérigraphique de couleur généralement sombre dont la largeur est préjudiciable à l'esthétique du véhicule est pratiqué sur la périphérie de la vitre arrière pour masquer la partie technique du montant qui serait sans cela visible au travers de la vitre arrière depuis l'extérieur du véhicule.

A toutes ces contraintes, s'ajoutent les contraintes spécifiques au procédé de moulage employé pour réaliser le hayon. Les hayons en matière plastique moulée présentent donc préférentiellement des formes ouvertes sans contredépouilles permettant un démoulage facile ne nécessitant pas l'emploi de tiroirs plus complexes à mettre en oeuvre.

Aussi, de nombreuses publications décrivant la section transversale des montants éclairent les voies empruntées par les concepteurs de véhicule pour satisfaire tout ou partie des exigences évoquées ci-dessus.

La publication FR 3 041 571 décrit un montant en forme de U comprenant sur la paroi interne du U une garniture incurvée vers les côtés latéraux du véhicule pour fermer l'ouverture du profilé et pour élargir le champ de rétrovision.

La publication EP 3 241 700 décrit un montant de hayon dont la section transversale est également en forme de U orienté vers l'arrière du véhicule. La base du U forme la portée du joint d'étanchéité et comporte une excroissance orientée vers l'avant du véhicule pour cacher la vue du joint d'étanchéité depuis l'intérieur de l'habitacle. La paroi latérale externe du U se prolonge vers le côté latéral extérieur du véhicule pour former une piste de collage de la vitre arrière et se poursuit en adoptant une forme aérodynamique s'étendant en excroissance vers l'arrière du véhicule. Cet arrangement ne permet pas d'augmenter le champ de rétrovision.

La publication JP2001-328429 propose un hayon en thermoplastique injecté comprenant des montants dont la section transversale est en forme de U ouvert vers l'arrière du véhicule et comprenant une paroi intérieure pour augmenter la rigidité du montant.

Les publications FR 2 927 876 A1, JP 2014 076707 A, DE 10 2011 000063 A1, DE 10 2015 120253 A1 et JP 2014 019359 A décrivent également des montants de hayon de l'état de l'art.

L'invention a pour objet de proposer un panneau structurel de hayon réalisé de préférence par moulage d'une matière thermoplastique ou thermodurcissable et permettant d'apporter une solution originale à l'ensemble des exigences évoquées dans les paragraphes qui précèdent. En particulier, l'invention a pour objet de proposer un panneau structurel de hayon comportant des montants latéraux de forme ouverte et présentant un angle de rétrovision maximum.

Le panneau structurel de hayon de véhicule selon l'invention est monté mobile en rotation par l'intermédiaire d'une ou plusieurs charnières sur un segment de toit formant partie de la carrosserie dudit véhicule. Ce panneau structurel de hayon comprend au moins un montant latéral sur lequel est rapportée une vitre arrière. Le montant, qui constitue un profilé à section transversale ouverte vers l'arrière en forme générale de U formant une concavité ouverte vers l'arrière, comporte une première paroi et une deuxième paroi, se rejoignant au niveau d'une base. La première et la deuxième paroi sont disposées de sorte que dans un plan sectionnel donné quelconque définissant une section droite dudit montant, il existe au moins une droite directrice appartenant audit plan sectionnel disposée de sorte que, en tout point de la première paroi une droite appartenant audit plan sectionnel et tangente à ladite première paroi fait un premier angle, orienté vers la partie transversale externe du véhicule, avec une droite médiane définie par la section dudit plan sectionnel avec un plan médian du véhicule, compris entre une valeur non nulle et une valeur inférieure à la valeur d'un deuxième angle, orienté vers la partie transversale externe du véhicule, et formé entre la droite médiane et la droite directrice. De même, en tout point de la deuxième paroi, une droite appartenant audit plan sectionnel et tangente à ladite deuxième paroi fait avec la droite médiane un troisième angle, orienté vers la partie transversale externe du véhicule, dont la valeur est comprise entre la valeur du deuxième angle et 90°.

Le panneau structurel hayon se caractérise en ce qu'un insert est disposé à l'extrémité arrière de la deuxième paroi dans une gorge définie entre une nervure interne et la paroi de la deuxième paroi, ledit insert comportant un pied inséré dans ladite gorge et une piste de collage destinée à recevoir la vitre arrière et en ce que la piste de collage (40) s'étend transversalement vers l'intérieur du véhicule dans l'ouverture (33) entre les deux parois (31,32).

Cet arrangement particulier permet, d'augmenter le champ de rétrovision, tout en proposant, comme on le verra par la suite, de disposer la portée du joint d'étanchéité et la piste de collage dans un encombrement contraint et prédéfini en préservant la rigidité mécanique du hayon.

Moyennant une adaptation du mécanisme de démoulage, il permet également de procéder à la fabrication du panneau structurel de hayon par moulage, de sorte que l'ensemble des parties du panneau structurel de hayon sont venues de matière.

La droite directrice de la cavité ouverte, est une droite appartenant au plan sectionnel du montant et qui est située dans la cavité, entre les deux parois dudit montant. Elle représente sensiblement la direction du mouvement des pièces de moule destinées à former la partie interne de la cavité du montant.

On appelle ici champ de rétrovision la portion d'espace extérieur visible latéralement au travers de la lunette par le conducteur. Ce champ est limité par l'espacement entre les montants du panneau structurel de hayon et forme donc un angle de vue vers l'arrière du véhicule, depuis les yeux du conducteur ou depuis le rétroviseur central. On peut ainsi caractériser ce champ par l'angle formé avec la direction longitudinale du véhicule par une droite passant par un rétroviseur avant et tangente au montant en un point le plus proche du plan médian du véhicule. Il va de soi que plus le montant est étroit plus le champ de rétrovision est important.

L'invention sera mieux comprise à la lecture des figures annexées, qui sont fournies à titre d'exemples et ne présentent aucun caractère limitatif, dans lesquelles :
- La figure 1 est une vue schématique d'un véhicule comprenant un hayon vu de l'arrière.
- La figure 2 est une vue schématique en perspective du panneau structurel de hayon proprement dit.
- La figure 3 est une vue schématique dans un plan sectionnel d'une coupe droite selon A-A du montant latéral droit du panneau structurel de hayon selon l'invention.
- La figure 4a est une vue de détail de l'insert inscrite dans le médaillon de la figure 3 selon une première alternative de réalisation de l'invention.
- La figure 4b est une vue de détail de l'insert inscrite dans le médaillon de la figure 3 selon une deuxième alternative de réalisation de l'invention.
- La figure 5 est une vue schématique d'une variante d'exécution de l'invention.

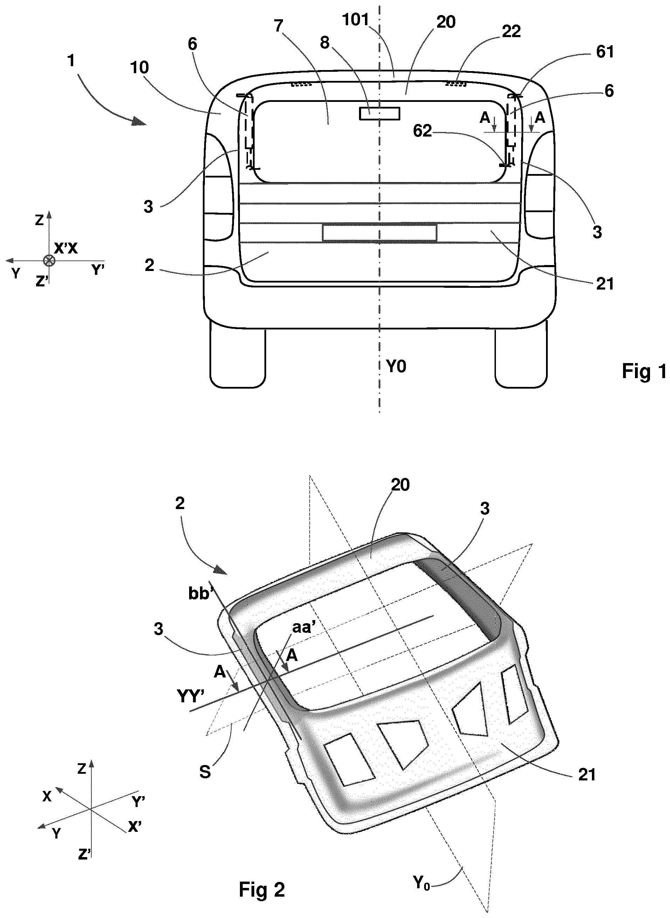

La partie arrière du véhicule 1 représentée à la figure 1 permet de visualiser le hayon 2 arrière fermant l'ouverture arrière.

Dans ce qui suit, on considèrera le repère orthonormé XYZ dans lequel l'axe X'X représente l'axe longitudinal orienté de l'arrière vers l'avant du véhicule, l'axe Y'Y représente l'axe transversal du véhicule, l'axe Z'Z représente l'axe vertical orienté du bas vers le haut. Le plan Y0, perpendiculaire à l'axe Y'Y correspond au plan médian du véhicule.

Le panneau structurel de hayon 2 comprend une partie supérieure 20 et une partie inférieure 21 reliées entre elles par deux montants latéraux 3. Ces montants latéraux sont symétriques par rapport au plan médian Y0. Le panneau structurel de hayon 2, encore dénommée doublure, est assimilé ici par extension au hayon lui-même.

La partie supérieure 20 est reliée par des charnières 22 au segment de toit 101 formant partie de la carrosserie 10 du véhicule 1. Une vitre arrière 7 est collée par sa périphérie sur les montants 3 et sur les parties supérieure 20 et inférieure 21 du panneau structurel de hayon 2.

Des actuateurs 6 fixés par des points d'attache 61 et 62 disposés respectivement sur la carrosserie et sur le montant 3 du hayon 2 ont pour objet de soulager les efforts d'ouverture et de fermeture du hayon 2.

La figure 2 illustre le panneau structurel de hayon 2 (i.e. la doublure) seul, formé de la partie supérieure 20 et de la partie inférieure 21, reliées entre elles par les montants 3.

La section droite du montant est contenue dans un plan sectionnel S. Dans le repère du montant la droite médiane aa' représente l'intersection du plan médian Y0 avec le plan sectionnel S et la droite bb' représente la direction perpendiculaire au plan sectionnel S. La direction transversale YY' reste inchangée. En règle générale, et bien que cette condition ne soit pas nécessaire, on considèrera le cas dans lequel les plans sectionnels en différents points du montant sont parallèles entre eux. On observera ici que la droite bb' n'est pas nécessairement orientée selon la direction générale du montant lorsque, par exemple, la vitre arrière a une forme trapézoïdale et que la largeur de la partie supérieure de la vitre est inférieure à la largeur de la partie inférieure de cette vitre. Par extension, lorsque le montant du panneau structurel de hayon 3 est orienté strictement à la verticale, la direction aa' se confond avec la direction longitudinale XX' du véhicule, et la direction bb' se confond avec la direction verticale ZZ".

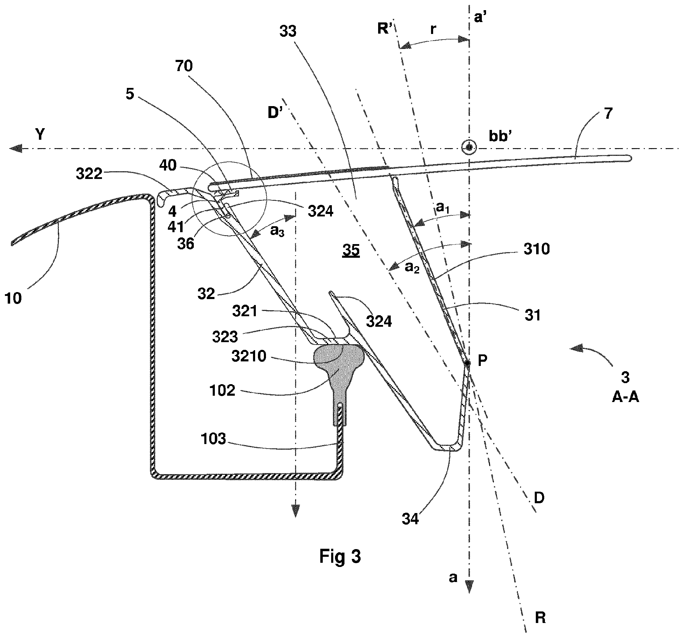

La figure 3 illustre dans le plan sectionnel S une section transversale droite selon A-A du montant 3 latéral droit du panneau structurel de hayon 2 représenté à la figure 2.

Le montant comprend une première paroi 31 et une deuxième paroi 32, sensiblement rectilignes, dont deux extrémités se rejoignent au niveau d'une base 34 et dont les deux autres extrémités sont disjointes et définissent une ouverture 33, à la manière d'un U incliné vers la partie latérale externe du véhicule et ouvert vers l'arrière du véhicule. Les deux parois 31 et 32 définissent ensemble un espace intérieur 35.

On adapte alors la forme des parois 31 et 32 de sorte que, dans un plan sectionnel S donné quelconque définissant une section droite dudit montant 3, il existe au moins une droite directrice DD' appartenant audit plans sectionnel S disposée de sorte qu'en tout point de la première paroi 31 une droite appartenant audit plan sectionnel S et tangente à ladite première paroi 31 fait un premier angle a₁, orienté vers la partie transversale YY' externe du véhicule, avec la droite médiane aa' compris entre une valeur non nulle et une valeur inférieure à la valeur d'un deuxième angle a₂, orienté vers la partie transversale YY' externe du véhicule, et formé entre la droite médiane aa' et ladite droite directrice DD' (0<a₁<a₂).

On entend ici par plan sectionnel quelconque un plan sectionnel choisi au hasard, ce qui sous-entend que la condition ci-dessus est vérifiée quel que soit le plan sectionnel du montant latéral.

On adapte également la forme de la deuxième paroi 32 pour que, en tout point de la deuxième paroi 32 une droite appartenant audit plan sectionnel et tangente à ladite deuxième paroi 32 fait avec la droite médiane aa' un troisième angle a₃, orienté vers la partie transversale YY' externe du véhicule, dont la valeur est comprise entre la valeur du deuxième angle a₂ et 90° (a₂<a₃<90°). A la valeur limite de 90°, la tangente à la deuxième paroi 32 est alors parallèle à l'axe transversal YY'.

On observera ici que, lorsque la structure du montant est très ouverte, il peut exister une pluralité de droites directrices DD' et qu'il suffit donc qu'il existe au moins une droite directrice vérifiant les conditions ci-dessus

La droite directrice DD' passe entre les deux parois 31 et 32, dans le creux du U. A titre indicatif, la valeur de l'angle a₂ est en pratique inférieure à 60° (0<a₂<60°).

L'inclinaison de la première paroi 31 permet d'augmenter le champ de vision. Ce champ de vision est défini ici par la droite RR' formée par l'intersection avec le plan sectionnel S d'un plan vertical passant par le rétroviseur central avant 8 et tangent en un point P à la partie intérieure de la section droite du montant dans le plan sectionnel S. Le point P correspond sensiblement au point de la section du montant 3 le plus proche intérieurement du plan médian Y0. Ce point P définit également le point de jonction entre la première paroi 31 et la base 34.

La droite RR' forme avec la direction médiane aa' un angle de rétrovision r. Plus la valeur de cet angle de rétrovision r est élevée, en d'autres termes plus le point P est éloigné du plan médian Y0, plus le champ de rétrovision est large. La droite RR' définit les limites du champ de rétrovision.

La base 34 du montant s'étend alors du point P jusqu'à la deuxième paroi 32.

On conçoit alors le montant pour que la valeur du premier angle a₁ soit au moins supérieure à la valeur de l'angle de rétrovision r. A titre indicatif, la valeur de ce premier angle a₁ est e pratique supérieure ou égale à 15°.

On remarquera que, en pratique, la droite directrice DD' représente la direction de déplacement du tiroir du moule destiné à former les parois de l'espace intérieur 35, constitué sensiblement de l'espace interne 35 compris entre la base 34, la première paroi 31 et de la deuxième paroi 32.

Pour des raisons de commodités de réalisation des pièces de moule ou peut s'arranger pour que les droites directrices appartenant à des plans sectionnels quelconques, soient parallèles entre elles et forment avec la droite médiane un deuxième angle a₂ constant. De même, dans un souci de simplification de la forme de ce tiroir, on peut s'arranger pour que l'enveloppe des droites directrices soit inscrite dans un plan.

La deuxième paroi 32 présente un premier décrochement 321 orienté selon la direction transversale YY'. Le joint d'étanchéité 102 disposé sur une feuillure 103 de la carrosserie 10 du véhicule vient en appui sur la face avant 3210 de ce décrochement 321, qui fait alors office de portée d'étanchéité.

La figure 3 illustre une variante d'exécution de l'invention dans laquelle une nervure interne 324 est portée par la deuxième paroi 32 au droit du premier décrochement 321 pour renforcer la structure du montant 3.

Pour les mêmes raisons de démoulabilité exposées ci-dessus la nervure 324 est sensiblement parallèle à la droite directrice DD', et arrangée de sorte que les deux faces latérales opposées de la nervure interne 324 présentent un angle de dépouille positif ou nul par rapport à la droite directrice DD'.

Dans le but d'augmenter le champ de vision arrière, l'extrémité arrière de la deuxième paroi 32 est aménagée pour recevoir un insert 4 comprenant une piste de collage 40 et un pied 41.

La piste de collage 40 est orientée transversalement selon l'axe YY' vers le coté intérieur du véhicule et occulte partiellement l'ouverture 33 de l'espace intérieur 35 formé par les parois 31 et 32. Ainsi, l'espace formant l'ouverture 33 entre les deux branches du U est occupé utilement et permet de réduire aux seules exigences des besoins structurels du hayon la largeur d'un deuxième décrochement 322 orienté sensiblement selon la direction transversale et situé en extrémité de la deuxième paroi 32.

La piste de collage 40 est destinée à recevoir le cordon de colle 5 permettant de lier la vitre 7 au montant 3 du panneau structurel de hayon 2.

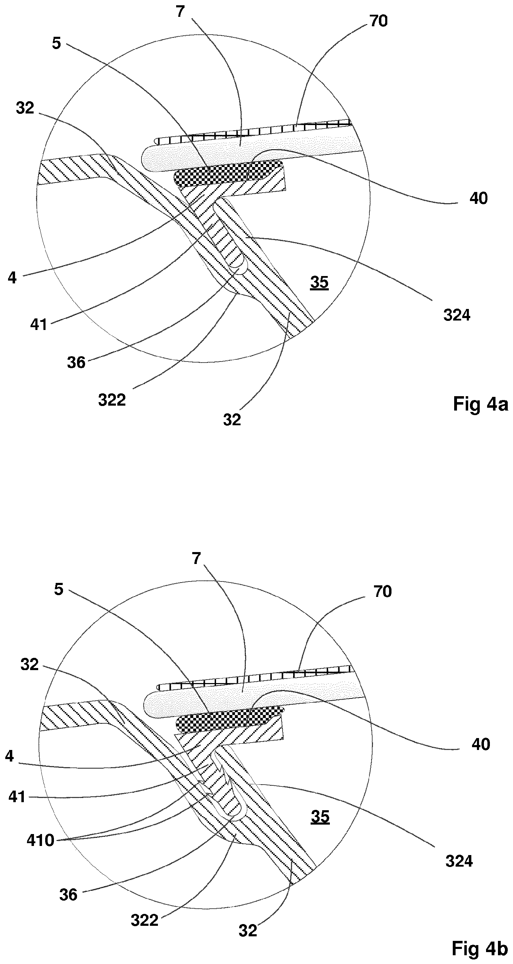

Une deuxième nervure interne 324 est disposée à l'extrémité arrière de la deuxième paroi 32. Cette deuxième nervure interne 324 est arrangée de manière à former une gorge 36, visible en détail sur les figures 4a et 4b, disposée dans l'espace compris entre la deuxième paroi 32 et la nervure interne 324. Pour fixer l'insert 4 sur le montant latéral 3, le pied 41 de l'insert 4 est introduit dans la gorge 36.

L'insert 4 peut être collé ou soudé sur le montant 3 comme cela est illustré à la figure 4a.

Alternativement, le pied 41 de l'insert 4 peut comporter des excroissances en queue de sapin comme cela est illustré à la figure 4b. Ces excroissances autorisent l'introduction de l'insert 4 dans la gorge 36, mais s'opposent, à l'image d'un harpon, à la sortie de l'insert 4 de la gorge 36 en jouant sur l'élasticité des lèvres de la gorge qui retiennent l'insert.

Il n'est en effet pas nécessaire que la liaison entre la vitre arrière 7 et le montant 3 soit réalisé par des moyens rigides et non élastique et une liaison par enfoncement mécanique peut suffire sur la longueur du montant. De plus en raison de la forme des lèvres de la gorge l'étanchéité entre l'insert 4 et le montant est assurée. A cet égard le choix du matériau formant l'insert adéquat, tel qu'un élastomère, peut garantir une meilleure étanchéité.

Préférentiellement, l'insert circule de manière continue sur toute la longueur du montant latéral.

Ces deux alternatives illustrées par les figures 4a et 4b permettent de réduire la largeur du montant 3 et d'éloigner transversalement le point P du plan médian Y0, de sorte que la valeur de l'angle de rétrovision r est augmentée significativement. Il en résulte également une diminution de la largeur du dépôt sérigraphique 70.

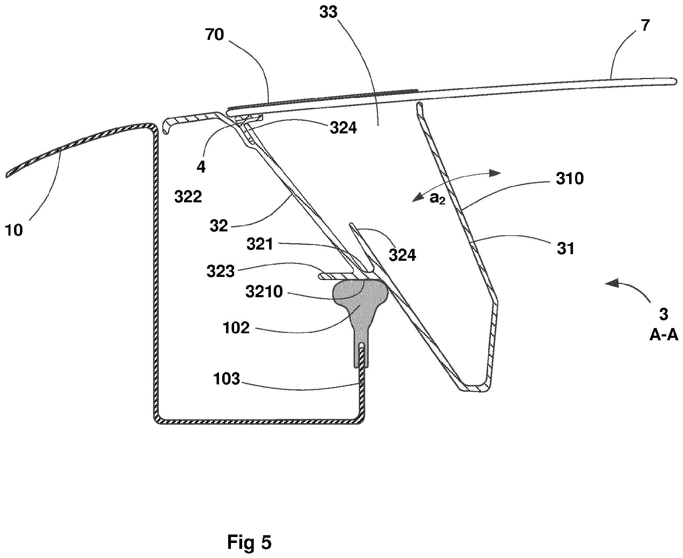

Une autre alternative illustrée à la figure 5 et permettant de réduire à nouveau la largeur du montant latéral 3, consiste à réduire la largeur du premier décrochement 321. Il peut alors s'avérer judicieux de placer une nervure externe 323 dans le prolongement du décrochement 321 pour augmenter la largeur de la portée d'étanchéité 3210 et améliorer la résistance mécanique du montant 3.

On observera néanmoins que cette alternative de réalisation impose l'utilisation d'un moule comportant un tiroir supplémentaire se déplaçant sensiblement dans la direction transversale YY'. Ce mode particulier de mise en œuvre autorise la réalisation d'une ou plusieurs nervures externes.

Il résulte de ce qui précède que la combinaison des caractéristiques des parois formant une structure ouverte et de la disposition de l'insert permet d'obtenir un panneau structurel de hayon dont la réalisation est peu coûteuse et qui présente des performances de vision arrière optimales.

A des fins esthétiques, pour masquer l'espace intérieur 35 du montant 3, visible à travers la vitre arrière au travers de l'ouverture 33 par un observateur placé à l'arrière du véhicule, un dépôt sérigraphique 70 de couleur généralement sombre est déposé sur la périphérie de la vitre arrière 7. On observera que ce dépôt sérigraphique 70 est réduit à la seule largeur de l'ouverture 33 séparant les extrémités arrière de la première paroi 31 et de la deuxième paroi 32.

Le panneau structurel de hayon arrière 2 tel que décrit ci-dessus dans chacune des alternatives ou variantes de réalisation peut être réalisé par moulage, d'un matériau thermoplastique ou thermodurcissable. Dans ces conditions, les montants 3, comprenant les nervures internes 324 et externes 323, sont venus de matière avec la partie supérieure 20 et la partie inférieure 21 du hayon.

### NOMENCLATURE

- 1: Véhicule.
- 10: Carrosserie/Châssis
- 101: Segment de toit.
- 102: Joint d'étanchéité
- 103: Feuillure supportant le joint d'étanchéité.
- 2: Hayon/Panneau structurel de hayon/Doublure.
- 20: Partie supérieure du hayon.
- 21: Partie inférieure du hayon.
- 22: Charnière.
- 3: Montant.
- 31: Première paroi.
- 32: Deuxième paroi.
- 321: Premier décrochement.
- 3210: Face avant du premier décrochement/Portée d'étanchéité.
- 322: Deuxième décrochement.
- 323: Nervure externe.
- 324: Nervure interne.
- 33: Ouverture.
- 34: Base.
- 35: Espace intérieur.
- 36: Gorge.
- 4: Insert.
- 40: Piste de collage de l'insert.
- 41: Pied de l'insert.
- 410: Queue de sapin
- 5: Colle.
- 6: Actuateur.
- 61: Point d'attache de l'actuateur disposé sur la carrosserie/châssis du véhicule.
- 62: Point d'attache de l'actuateur disposé sur le hayon.
- 7: Vitre arrière.
- 70: Dépôt sérigraphique.
- 8: Rétroviseur.
- 9: Insert
- XX': Axe longitudinal du véhicule (arrière/avant).
- YY': Axe transversal du véhicule (droite/gauche).
- ZZ': Axe Vertical du véhicule (bas/haut).
- Y0: Plan longitudinal médian perpendiculaire à l'axe YY' (passant par le rétroviseur).
- aa': Droite médiane.
- bb': Droite perpendiculaire au plan sectionnel.
- DD': Droite directrice.
- S: Plan sectionnel.
- r: Angle de rétrovision.
- a₁: Premier angle entre la première paroi et la droite médiane aa'.
- a₂: Deuxième angle entre la droite directrice DD' et la droite médiane aa".
- a₃: Troisième angle entre la deuxième paroi et la droite médiane aa'.'
- P: Point intérieur du montant le plus proche du Y0 du véhicule.

## Revendications

1. Panneau structurel de hayon (2) de véhicule (1) destiné à être monté mobile en rotation par l'intermédiaire d'une ou plusieurs charnières (22) sur un segment de toit (101) formant partie de la carrosserie (10) dudit véhicule (1), ledit panneau structurel de hayon (2) comprenant au moins un montant latéral (3) sur lequel est rapportée une vitre arrière (7), le montant latéral (3) constituant un profilé à section transversale ouverte en forme générale de U formant une concavité ouverte vers l'arrière du véhicule et comportant une première paroi (31) et une deuxième paroi (32) se rejoignant au niveau d'une base (34) disposées de sorte que, dans un plan sectionnel (S) donné quelconque définissant une section droite dudit montant (3) il existe au moins une droite directrice DD' appartenant audit plan sectionnel (S) et disposée de sorte que, en tout point de la première paroi une droite appartenant audit plan sectionnel (S) et tangente à ladite première paroi (31)) fait un premier angle (a₁), orienté vers la partie transversale (YY') externe du véhicule, avec une droite médiane (aa') définie par la section dudit plan sectionnel (S) avec un plan médian (Y0) du véhicule, compris entre une valeur non nulle et une valeur inférieure à la valeur d'un deuxième angle (a₂), orienté vers la partie transversale (YY') externe du véhicule, et formé entre la droite médiane (aa') et ladite droite directrice (DD'), et en ce en tout point de la deuxième paroi (32), une droite appartenant audit plan sectionnel et tangente à ladite deuxième paroi (32) fait avec la droite médiane (aa') un troisième angle (a₃), orienté vers la partie transversale (YY') externe du véhicule, dont la valeur est comprise entre la valeur du deuxième angle (a₂) et 90°,
**caractérisé en ce qu'**un insert (4) est disposé à l'extrémité arrière de la deuxième paroi (32) dans une gorge (36) définie entre une nervure interne (324) et la paroi de la deuxième paroi (32), ledit insert (4) comportant un pied (41) inséré dans ladite gorge (36) et une piste de collage (40) destinée à recevoir la vitre arrière (7) **et en ce que** la piste de collage (40) s'étend transversalement vers l'intérieur du véhicule dans l'ouverture (33) entre les deux parois (31, 32).

2. Panneau structurel de hayon (2) de véhicule (1) selon la revendication 1, dans lequel le pied (41) de l'insert (4) est collé ou soudé dans ladite gorge (36) portée par la deuxième paroi (32).

3. Panneau structurel de hayon de véhicule (1) selon la revendication 1 dans lequel le pied (41) de l'insert (4) comporte des excroissances latérales en queue de sapin (410) insérée dans ladite gorge (36) portée par la deuxième paroi (32).

4. Panneau structurel de hayon de véhicule (1) selon l'une quelconques des revendications précédentes dans lequel l'insert (4) s'étend continument sur toute la longueur du montant latéral (3).

5. Panneau structurel de hayon (2) de véhicule selon l'une quelconque des revendications précédentes, dans lequel la droite directrice (DD') et la droite médiane (aa') appartenant à un plan sectionnel (S) quelconque du montant forment un deuxième angle (a₂) constant.

6. Panneau structurel de hayon (2) de véhicule selon la revendication 5, dans lequel l'enveloppe des droites directrices (DD') forme un plan.

7. Panneau structurel de hayon (2) de véhicule (1) selon l'une quelconque des revendications précédentes, dans lequel, pour un véhicule donné, le premier angle (a₁) est supérieur à un angle de rétrovision (r) formé entre l'intersection avec le plan sectionnel (S) d'un plan vertical passant par un rétroviseur avant (8) dudit véhicule et tangent en un point (P) à la section droite du montant (3) le plus proche du plan médian (Y0) du véhicule, et la droite médiane (aa').

8. Panneau structurel de hayon (2) de véhicule (1) selon l'une quelconque des revendications précédentes, dans lequel la deuxième paroi (32) comprend un premier décrochement (321) orienté selon la direction transversale (YY') dont la face avant (3210) forme une portée d'étanchéité destinée à être mise en appui avec un joint d'étanchéité (102) disposé sur la carrosserie (10, 102) du véhicule.

9. Panneau structurel de hayon (2) de véhicule (1) selon l'une quelconque des revendications précédentes, dans lequel la deuxième paroi (32) comporte une ou plusieurs nervures internes (324) sensiblement parallèles à la droite directrice (DD').

10. Panneau structurel de hayon (2) de véhicule (1) selon l'une quelconque des revendications précédentes, dans lequel une ou plusieurs nervures externes (323) sont disposées sur la face externe (323) de la deuxième paroi (32).

11. Panneau structurel de hayon (2) de véhicule (1) selon la revendication 10 prise en combinaison avec la revendication 8, dans lequel la deuxième paroi (32) comporte une nervure externe (323) prolongeant la portée d'étanchéité (3210).

12. Panneau structurel de hayon (2) de véhicule (1) selon l'une quelconque des revendications précédentes, dans lequel les profilés des montants (3), comprenant les nervures internes (324) et externes (324), sont venus de matière avec la partie supérieure (20) et la partie inférieure (21) du panneau structurel de hayon (2), ledit panneau structurel de hayon (2) étant réalisé par moulage d'un matériau thermodurcissable ou thermoplastique.

## Patentansprüche

1. Strukturpaneel einer Heckklappe (2) eines Fahrzeugs (1), das dazu bestimmt ist, mittels eines oder mehrerer Scharniere (22) drehbar an einem Dachsegment (101) angebracht zu werden, das einen Teil der Karosserie (10) des Fahrzeugs (1) bildet, wobei das Strukturpaneel der Heckklappe (2) mindestens eine Seitensäule (3) aufweist, an der eine Heckscheibe (7) befestigt ist, wobei die Seitensäule (3) ein allgemein U-förmiges Profil mit offenem Querschnitt bildet, das eine zum Heck des Fahrzeugs hin offene Konkavität bildet und eine erste Wand (31) und eine zweite Wand (32) aufweist, die sich an einer Basis (34) trifft, die so angeordnet ist, dass in jeder gegebenen Schnittebene (S), die einen geraden Abschnitt der Säule (3) definiert, mindestens eine direkte Linie DD' vorhanden ist, die zu der Schnittebene (S) gehört und so angeordnet ist, dass an jedem Punkt der ersten Wand eine Linie, die zu der Schnittebene (S) gehört und die erste Wand (31) tangiert, einen ersten Winkel (a1) bildet, der auf den äußeren Querteil (YY') des Fahrzeugs ausgerichtet ist, mit einer mittleren Geraden (aa'), die durch den Schnitt der genannten Schnittebene (S) mit einer Mittelebene (Y0) des Fahrzeugs definiert ist, zwischen einem Wert ungleich Null und einem Wert, der kleiner ist als der Wert eines zweiten Winkels (a2), der auf den äußeren Querteil (YY') des Fahrzeugs ausgerichtet ist, und zwischen der mittleren Geraden (aa') und der genannten Richtungsgeraden (DD') gebildet wird, und an jedem Punkt der zweiten Wand (32) eine zur genannten Schnittebene gehörende und die genannte zweite Wand (32) tangierende Gerade mit der mittleren Geraden (aa') einen dritten Winkel (a3) bildet, der auf den äußeren Querteil (YY') des Fahrzeugs ausgerichtet ist, dessen Wert zwischen dem Wert des zweiten Winkels (a2) und 90° liegt, **dadurch gekennzeichnet, dass** ein Einsatz (4) am hinteren Ende der zweiten Wand (32) in einer Nut (36) angeordnet ist, die zwischen einer inneren Rippe (324) und der Wand der zweiten Wand (32) definiert ist, wobei der Einsatz (4) einen Fuß (41), der in die Nut (36) eingesetzt ist, und eine Klebespur (40) aufweist, die dazu bestimmt ist, die Heckscheibe (7) aufzunehmen, und dass sich die Klebespur (40) quer zum Fahrzeuginneren in der Öffnung (33) zwischen den beiden Wänden (31, 32) erstreckt.

2. Strukturpaneel einer Heckklappe (2) eines Fahrzeugs (1) gemäß Anspruch 1, bei der der Fuß (41) des Einsatzes (4) in die von der zweiten Wand (32) getragene Nut (36) geklebt oder geschweißt ist.

3. Strukturpaneel einer Heckklappe eines Fahrzeugs (1) gemäß Anspruch 1, bei der der Fuß (41) des Einsatzes (4) seitliche tannenbaumförmige Vorsprünge (410) aufweist, die in die von der zweiten Wand (32) getragene Nut (36) eingesetzt sind.

4. Strukturpaneel einer Heckklappe eines Fahrzeugs (1) gemäß einem der vorhergehenden Ansprüche, bei dem sich der Einsatz (4) kontinuierlich über die gesamte Länge der Seitensäule (3) erstreckt.

5. Strukturpaneel einer Heckklappe (2) eines Fahrzeugs gemäß einem der vorhergehenden Ansprüche, wobei die Richtungsgerade (DD') und die mittlere Gerade (aa'), die zu einer beliebigen Schnittebene (S) der Säule gehören, einen zweiten konstanten Winkel (a2) bilden.

6. Strukturpaneel einer Heckklappe (2) eines Fahrzeugs gemäß Anspruch 5, bei der die Umhüllende der Richtungsgeraden (DD') eine Ebene bildet.

7. Strukturpaneel einer Heckklappe (2) eines Fahrzeugs (1) gemäß einem der vorhergehenden Ansprüche, wobei für ein gegebenes Fahrzeug der erste Winkel (a1) größer ist als ein Rücksichtwinkel (r), der zwischen dem Schnittpunkt mit der Schnittebene (S) einer vertikalen Ebene, die durch einen Frontspiegel (8) des Fahrzeugs verläuft und an einem Punkt (P) den Querschnitt der Säule (3) tangiert, die der Mittelebene (Y0) des Fahrzeugs am nächsten liegt, und der Mittellinie (aa') gebildet wird.

8. Strukturpaneel einer Heckklappe (2) eines Fahrzeugs (1) gemäß einem der vorhergehenden Ansprüche, bei der die zweite Wand (32) eine erste, in Querrichtung (YY') ausgerichtete Aussparung (321) aufweist, deren Vorderseite (3210) eine Dichtfläche bildet, die dazu bestimmt ist, mit einer an der Karosserie (10, 102) des Fahrzeugs angeordneten Dichtung (102) in Kontakt gebracht zu werden.

9. Strukturpaneel einer Heckklappe (2) eines Fahrzeugs (1) gemäß einem der vorhergehenden Ansprüche, wobei die zweite Wand (32) eine oder mehrere innere Rippen (324) aufweist, die im Wesentlichen parallel zur Richtungsgeraden (DD') verlaufen.

10. Strukturpaneel einer Heckklappe (2) eines Fahrzeugs (1) gemäß einem der vorhergehenden Ansprüche, wobei eine oder mehrere äußere Rippen (323) auf der Außenfläche (323) der zweiten Wand (32) vorgesehen sind.

11. Strukturpaneel einer Heckklappe (2) eines Fahrzeugs (1) gemäß Anspruch 10 in Kombination mit Anspruch 8, wobei die zweite Wand (32) eine äußere Rippe (323) aufweist, die die Dichtungsfläche (3210) verlängert.

12. Strukturpaneel einer Heckklappe (2) eines Fahrzeugs (1) gemäß einem der vorhergehenden Ansprüche, wobei die Profile der Säulen (3), die die inneren (324) und äußeren (324) Rippen aufweisen, mit dem oberen Teil (20) und dem unteren Teil (21) des Strukturpaneels der Heckklappe (2) einstückig sind, wobei das Strukturpaneel der Heckklappe (2) durch Formen eines wärmehärtbaren oder thermoplastischen Materials hergestellt ist.

## Claims

1. Structural tailgate panel (2) of a vehicle (1), which panel is intended to be mounted so as to be rotatably movable by means of one or more hinges (22) on a roof segment (101) which forms part of the body (10) of said vehicle (1), said tailgate structural panel (2) comprising at least one lateral upright (3) to which a rear window (7) is attached, the lateral upright (3) constituting a profile having an open cross section in the general shape of a U which forms a concavity that is open toward the rear of the vehicle and which comprises a first wall (31) and a second wall (32) meeting at a base (34) arranged such that, in any given sectional plane (S) defining a cross section of said upright (3), there is at least one directrix line DD' in said sectional plane (S) and arranged such that, at any point of the first wall, a straight line in said sectional plane (S) and tangent to said first wall (31) forms a first angle (a₁) with a median line (aa') defined by the section of said sectional plane (S) with a median plane (Y0) of the vehicle, which first angle is oriented toward the outer transverse part (YY') of the vehicle and is between a non-zero value and a value less than the value of a second angle (a₂) which is oriented toward the outer transverse part (YY') of the vehicle, and formed between the median line (aa') and said directrix line (DD'), and at any point of the second wall (32), a straight line in said sectional plane and tangent to said second wall (32) forms a third angle (a₃) with the median line (aa'), which third angle is oriented toward the outer transverse part (YY') of the vehicle, and the value of which is between the value of the second angle (a₂) and 90°, **characterized in that** an insert (4) is arranged at the rear end of the second wall (32) in a groove (36) defined between an inner rib (324) and the wall of the second wall (32), said insert (4) comprising a foot (41) inserted in said groove (36) and an adhesive track (40) intended to receive the rear window (7), **and in that** the adhesive track (40) extends transversely toward the interior of the vehicle in the opening (33) between the two walls (31, 32).

2. Structural tailgate panel (2) of a vehicle (1) according to claim 1, wherein the foot (41) of the insert (4) is adhered or welded in said groove (36) carried by the second wall (32).

3. Structural tailgate panel of a vehicle (1) according to claim 1, wherein the foot (41) of the insert (4) comprises lateral protrusions (410), which form a fir-tree shape, inserted in said groove (36) carried by the second wall (32).

4. Structural tailgate panel of a vehicle (1) according to any of the preceding claims, wherein the insert (4) extends continuously over the entire length of the lateral upright (3).

5. Structural tailgate panel (2) of a vehicle according to any of the preceding claims, wherein the directrix line (DD') and the median line (aa') in any sectional plane (S) of the upright form a second constant angle (a₂).

6. Structural tailgate panel (2) of a vehicle according to claim 5, wherein the envelope of the directrix lines (DD') forms a plane.

7. Structural tailgate panel (2) of a vehicle (1) according to any of the preceding claims, wherein, for a particular vehicle, the first angle (a₁) is greater than a rear-view angle (r) formed between the intersection with the sectional plane (S) of a vertical plane which passes through a front rear-view mirror (8) of said vehicle and is tangent at a point (P) to the cross section of the upright (3) closest to the median plane (Y0) of the vehicle, and the median line (aa').

8. Structural tailgate panel (2) of a vehicle (1) according to any of the preceding claims,
wherein the second wall (32) comprises a first recess (321) oriented in the transverse direction (YY'), the front face (3210) of which recess forms a sealing surface intended to be brought into abutment with a sealing joint (102) arranged on the body (10, 102) of the vehicle.

9. Structural tailgate panel (2) of a vehicle (1) according to any of the preceding claims,
wherein the second wall (32) comprises one or more inner ribs (324) substantially parallel to the directrix line (DD').

10. Structural tailgate panel (2) of a vehicle (1) according to any of the preceding claims,
wherein one or more outer ribs (323) are arranged on the outer face (323) of the second wall (32).

11. Structural tailgate panel (2) of a vehicle (1) according to claim 10 taken in combination with claim 8, wherein the second wall (32) comprises an outer rib (323) that extends the sealing surface (3210).

12. Structural tailgate panel (2) of a vehicle (1) according to any of the preceding claims,
wherein the profiles of the uprights (3), comprising the inner ribs (324) and outer ribs (324), are integrally formed with the upper part (20) and the lower part (21) of the structural tailgate panel (2), said structural tailgate panel (2) being produced by molding a thermosetting or thermoplastic material.
